# EUROPEAN PATENT APPLICATION

(11) **EP 4 794 213 A1**
(43) Date of publication of application: **19.08.2026**
(21) Application number: 25157457.0
(22) Date of filing: 12.02.2025
(51) Int. Cl.: H04B 7/0404, H04B 7/0408, H04B 7/0417, H04B 7/0452, H04B 7/0491

(54) **BEAMFORMING FEEDBACK REDUCTION FOR UPLINK MU-MIMO**

(71) Applicant: Vestel Elektronik Sanayi ve Ticaret A.S., 45030 Manisa (TR)
(72) Inventor: YAHYA, Salim, 34810 Istanbul (TR); ABIDRABBU, Shaima, 34810 Istanbul (TR); ARSLAN, Hüseyin, 34810 Istanbul (TR)
(74) Representative: Grünecker Patent- und Rechtsanwälte PartG mbB

(57) **Abstract**

Some embodiments in the present disclosure relate to wireless communication of an access point with a plurality of devices. A trigger frame is transmitted to the plurality of devices and devices that intend to participate in uplink communication respond with response information. Based on directional information of the devices, the devices are grouped and feedback information individually for each group is generated and transmitted with directional beams to the groups. Based on the feedback information, the devices can communicate with the AP.

## Description

The present disclosure relates generally to wireless communication and in particular to beamforming feedback in uplink for multi-user multiple-input multiple-output (MU-MIMO) networks. More specifically, the present disclosure relates to methods and apparatuses for generating and using such beamforming feedback.

### BACKGROUND

Uplink (UL) channel access has become a critical area of focus in both Wi-Fi and 3GPP networks, as efficient management of UL resources directly impacts network performance and user experience. Two primary approaches to handle uplink access have emerged in the literature: scheduled access (SA) and random access (RA).

In RA, each user transmits a request for service independently, placing a heavy burden on the base station (BS) to manage time synchronization and separate overlapping signals. Although widely used, RA may pose significant limitations, particularly in scenarios with high user density, where resource management and signal separation may become complex and inefficient.

Another approach is SA, where the base station initiates uplink communication by sending a trigger frame to all users simultaneously. However, this approach introduces its own set of challenges.

### SUMMARY

Methods and techniques as well as devices are described herein for an efficient beamforming feedback for uplink in MU-MIMO wireless networks.

The invention is defined by the features of independent claims. Some exemplary implementations are provided by the dependent claims.

For example, An access point, AP, is provided for wireless communication, comprising a transceiver configured to transmit trigger information, and receive response information from a plurality of devices, a processing circuitry, configured to determine directional information from the response information for each of the plurality of devices, divide the plurality of devices into at least two groups based on the directional information of the respective plurality of devices, generate, individually for each of the groups, feedback information, and cause the transceiver to transmit the respective feedback information for each of the groups based on the directional information of the devices in the group.

These and other features and characteristics of the presently disclosed subject matter, as well as the methods of operation and functions of the related elements of structures and the combination of parts and economies of manufacture, will become more apparent upon consideration of the following description and the appended claims with reference to the accompanying drawings, all of which form a part of this specification. It is to be expressly understood, however, that the drawings are for the purpose of illustration and description only and are not intended as a definition of the limits of the disclosed subject matter. As used in the specification and the claims, the singular form of "a," "an," and "the" include plural referents unless the context clearly dictates otherwise.

### BRIEF DESCRIPTION OF DRAWINGS

An understanding of the nature and advantages of various embodiments may be realized by reference to the following figures.
- FIG. 1: is a block diagram illustrating an exemplary communication system;
- FIG. 2: is a schematic drawing illustrating an access point AP with a plurality of wireless devices of various types;
- FIG. 3: is a timeline diagram of a scheduled access approach in a wireless network;
- FIG. 4: is a timeline diagram of a scheduled access approach according to an embodiment;
- FIG. 5: is a block diagram of an exemplary AP;
- FIG. 6: is a schematic drawing illustrating sending a trigger frame TF or trigger information;
- FIG. 7: is a schematic drawing illustrating wireless devices responding with a null data packet, NDP, or response information;
- FIG. 8: is a schematic drawing illustrating the AP sending feedback information in two beams respectively to two groups of devices;
- FIG. 9: is a schematic drawing illustrating the AP sending a beamforming feedback matrix respectively to each group;
- FIG. 10: is a schematic drawing illustrating beam direction and beam width used for the beams sent by the AP for sending feedback information;
- FIG. 11: is a schematic drawing showing a sectoring approach;
- FIG. 12: is a flowchart showing a method for wireless communication of an AP with a plurality of devices;
- FIG. 13: is a flowchart showing a method for wireless communication of an AP with a plurality of devices; and
- FIG. 14: is a flowchart showing a method for wireless communication performed by an AP.

Like reference numbers and symbols in the various figures indicate like elements, in accordance with certain example implementations.

### DETAILED DESCRIPTION

For purposes of the description hereinafter, the terms "end," "upper," "lower," "right," "left," "vertical," "horizontal," "top," "bottom," "lateral," "longitudinal," and derivatives thereof shall relate to the disclosed subject matter as it is oriented in the drawing figures. However, it is to be understood that the disclosed subject matter may assume various alternative variations and step sequences, except where expressly specified to the contrary. It is also to be understood that the specific devices and processes illustrated in the attached drawings, and described in the following specification, are simply exemplary embodiments or aspects of the disclosed subject matter. Hence, specific dimensions and other physical characteristics related to the embodiments or aspects disclosed herein are not to be considered as limiting unless otherwise indicated.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Furthermore, as used herein, the term "set" is intended to include one or more items (e.g., related items, unrelated items, a combination of related and unrelated items, and/or the like) and may be used interchangeably with "one or more" or "at least one." Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise.

It is further noted that the terms "comprise" and "include" are used interchangeably herein and are to be understood as non-exclusive.

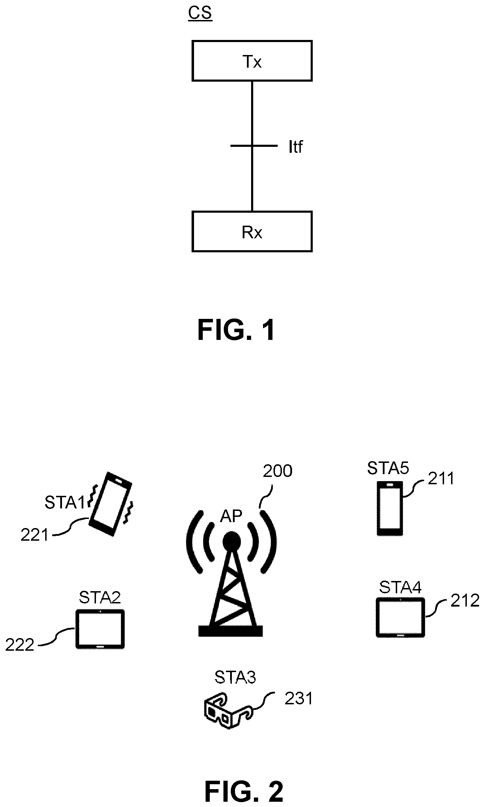

Fig. 1 illustrates an exemplary communications system CS in which Tx represents a transmitter and Rx represents a receiver of a wireless signal. The transmitter Tx is capable of transmitting a signal to the receiver Rx or to a group of receivers or to broadcast a signal over an interface Itf. The interface Itf may be for example any wireless interface. The interface Itf may be specified by means of resources, which can be used for the transmission and reception by the transmitter Tx and the receiver Rx. Such resources may be defined in one or more (or all) of the time domain, frequency domain, code domain, and space domain (e.g. beams). It is noted that in general, the transmitter Tx and receiver Rx may be also both integrated into the same device Tx+Rx. In other words, the devices Tx and Rx in Fig. 1 may respectively also include the functionality of the Rx and Tx.

The present disclosure is not limited to any particular transmitter Tx, receiver Rx and/or interface Itf implementation. However, it may be applied readily to some existing communication systems as well as to the extensions of such systems, or to new communication systems. Exemplary existing communication systems may be, for instance the 5G New Radio (NR) in its current or future releases, 6G systems, and/or the IEEE 802.11 based systems such as the recently studied IEEE 802.11 be or the like.. Moreover, the transmitter and/or the receiver may support precoding and beamforming. For example, the interface Itf may be a MIMO interface. One transmitter and/or receiver may communicate with a plurality of other transmitters/receivers and may be implemented in a MU-MIMO setup in uplink and/or downlink.

Correspondingly, in the present disclosure, the term access point is not limited to an access point of a Wi-Fi standard. Rather, it is meant more generally as point of accessing the network. Thus, it comprises any base stations or nodes that enable wireless access to a network. When referring to a STA or user or a user station, the terms are not limited to devices supporting Wi-Fi. Rather, the term is means more generally and comprises user equipment of any kind, such as the user equipment (UE) defined within the 3GPP framework or any terminal device capable of wireless communication.

### Uplink access in MU-MIMO

Fig. 2 shows an exemplary Multi-User Multiple-Input Multiple-Output (MU-MIMO) wireless communication setup, in which exemplary embodiments may be implemented. The setup comprises an access point (AP) 200 and multiple stations (STAs, in the figure STA1 to STA5) 211, 212, 221, 222, and 231, each equipped with one or more antennas. In this generic configuration, the AP serves as the central node for managing communication within the network, coordinating both downlink (from the AP to the STAs) and uplink (from the STAs to the AP) transmissions. The MU-MIMO technology enables simultaneous data transmission of data belonging to different users (STAs) across multiple spatial streams, leveraging differences in the spatial signatures of each STA to maximize spectral efficiency. The access point 200 uses beamforming techniques to transmit and receive data with possibly minimal interference between spatial streams, optimizing throughput and maintaining signal integrity across the network.

In a network with one AP 200 and multiple STAs 211-231, the AP 200 operates as a hub for all communication activities. Each STA may have varying traffic demands, channel conditions, and antenna configurations, requiring the AP 200 to adaptively allocate resources to ensure efficient operation. The STAs may be any devices such as personal mobile devices, e.g. mobile phones, smartphones, tablets, notebooks, virtual reality glasses, or even some Internet of Things (IoT) devices, or the like.

In the uplink scenario, where STAs transmit data to the AP 200, the AP 200 can schedule multiple STAs 211-231 to transmit their data simultaneously, provided their spatial channels are sufficiently orthogonal. This coordination relies on collecting Channel State Information (CSI) from the STAs 211-231. The AP 200 uses the CSI to determine the spatial stream assignments and transmission schedules. By managing uplink access in this manner, the MU-MIMO setup reduces latency, improves throughput, and supports more devices effectively in high-density wireless environments.

Uplink (UL) channel access has become an area of focus in both Wi-Fi and 3GPP networks, as an efficient management of UL resources may directly impact network performance and user experience. Uplink channel access generally refers to mechanisms by which a device gains permission to transmit data to a network, for instance, either a Wi-Fi access point (AP) or a cellular base station (BS, such as eNB, gNB or the like). As mentioned above, two approaches to handle uplink access have emerged, the scheduled access (SA) and the random access (RA).

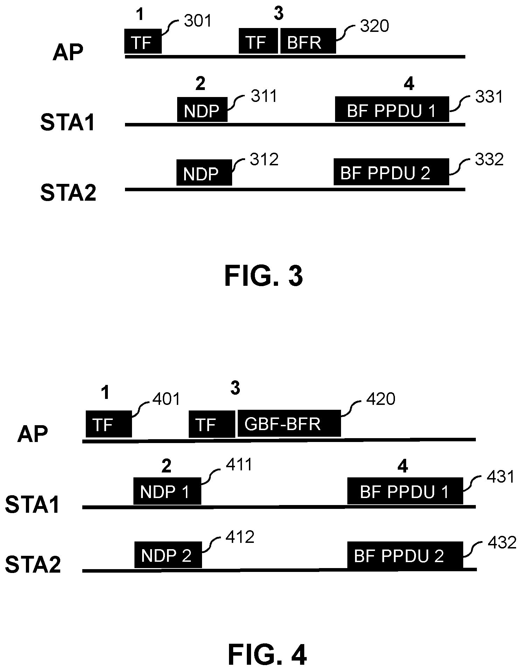

To address these challenges, some standardization committees have advocated for SA, exemplary shown in Fig. 3. In SA, as a first step an access point AP initiates uplink communication by sending a trigger frame (TF) 301 to all users 221, 222, 211, 212 and 231 simultaneously. In Fig. 3, a scenario with two users STA1 and STA2 is illustrated. Users wishing to access UL resources respond with a null data packet (NDP) 311, 312 to the AP in a second step. Accordingly, the base station may efficiently schedule resources for those users. In systems utilizing MU-MIMO, in step 3, the access point AP further refines this process by sending a beamforming feedback report (BFR) 320 containing precoder and channel information. The precoder and channel information are provided for to facilitate beamforming. The BFR may contain the precoder and the channel information for all the STA's, each STA then extracts its respective matrix and uses it to perform the uplink beamforming. In step 4, both the STA1 and STA 2 transmit their respective own beamforming (BF) physical protocol data unit (PPDU). In other words, they transmit the PDUs with the respective beams toward the base station. Details of this approach are discussed later. However, this approach introduces its own set of challenges. For example, overhead associated with the beamforming feedback report size may cause further computational burden for the user equipment (STA) and reduce the effective data rate for transmitting information.

Several challenges may lower the performance of uplink MU-MIMO precoding. One common limitation is the inefficiency of non-triggered per-STA uplink sounding. In this approach, each station independently handles sounding procedures, leading to suboptimal resource allocation and increased interference. This is because stations may request sounding at different times, possibly resulting in uneven channel estimation and inefficient utilization of time resources. Another challenge may be the limited performance of per-STA precoding methods in managing multi-user interference (MUI). When each station independently determines its precoding matrix, it can inadvertently interfere with other stations' transmissions. This can result in reduced data rates, increased error rates, and decreased overall system capacity.

To address these shortcomings, one possibility is a coordinated uplink MIMO precoding at the AP as a means to improve interference management. By centralizing the precoding process, the AP can optimize the precoding matrices for all stations, minimizing interference and maximizing system performance. A further modification may be trigger-based PPDUs to enable more efficient beamforming. In this approach, the AP triggers sounding procedures for specific stations based on their traffic requirements. This can reduce the overhead associated with non-triggered sounding and improve the overall efficiency of the system. Furthermore, smooth beamforming and implicit UL beamforming techniques may enhance system performance. Smooth beamforming involves gradually transitioning between different beamforming matrices to minimize abrupt changes in the transmitted signal. Implicit UL beamforming leverages the spatial correlation between uplink and downlink channels to improve channel estimation and precoding accuracy.

However, even these approaches may have their limitations. Triggered beamforming, while beneficial, may not eliminate interference in high-MUI scenarios completely. This is because the AP may not always be able to accurately predict the interference levels or allocate resources optimally. Uplink precoding may provide significant performance gains, with around 8dB of improvement in many cases. There are trade-offs between sounding intervals and channel aging, offering insights into how precoding is more robust against channel aging than beamforming. Some disadvantages that come from this may include inefficiency in Non-Triggered Per-STA Uplink Sounding and Limited Performance in Per-STA Precoding for MU-MIMO. This may be expanded on triggered beamforming in TGbn (Wi-Fi 8 Task Group), with possible benefits of applying precoding to Trigger-Based PPDUs, particularly in MU-MIMO contexts. The roles of the AP and non-AP STAs in the sounding and precoding processes may be defined further. Furthermore, a triggered sounding protocol may be implemented where the AP initiates the sounding procedure and provides a ready-to-use precoder to non-AP STAs. This approach may lead to significant performance gains, such as an 8dB improvement in UL MU-MIMO, with limited impact on the complexity of the system. As a result, the Straw Poll (SP) run and the outputs was very high to push the applying precoding to Trigger-Based PPDUs, particularly in MU-MIMO in the uplink discretion to be part of the Wi-Fi 8 generation. On the other hand, the beamforming feedback report size may lower the efficiency.

From 3GPP standards point of view, SA approaches may be called beamforming weight feedback in MU-MIMO. The process itself is called beamforming coordination. The steps of this process may be as follows:
1. Channel estimation: The BS transmits pilots to the UE in different time or frequency resources. The UEs sends back feedback based on these pilots to the BS where the channel characteristics between the antennas of the UE and the BS antennas are indicated. Then, the BS estimates the channel impulse response (CIR) for each antenna pair.
2. Beamforming weight calculation: First, the BS processes the channel estimates to calculate the optimal beamforming weights. These weights determine the amplitude and phase of the signals transmitted from each of the UE's antennas. And then, the BS uses algorithms such as maximum ratio combining (MRC), zero-forcing (ZF), or minimum mean squared error (MMSE) to compute the weights.
3. Beamforming Weight Feedback: The BS sends the calculated beamforming weights to the UE.
4. UE Beamforming: The UE applies the beamforming weights to its uplink transmissions. This involves multiplying the data symbols by the corresponding weights before transmission.

Note that this may be performed based on the RA where the users are initiating the channel access handshake. One of the challenges is the feedback overhead. Frequent feedback of channel estimates and beamforming weights can increase signaling overhead. Techniques like limited feedback and codebook-based feedback may help reduce overhead. However, these approaches may limit the number of users that can use the UL channel. Therefore, there is room for improvement.

In general, for channel estimation in downlink, a BS transmits pilot signals, also known as reference signals, over specific time and frequency resources. These pilots are predefined signals that allow the BS to assess the channel characteristics. The BS sends pilot signals to a UE (or a plurality of UEs). In LTE, these pilots are referred to as Cell-Specific Reference Signals (CRS) or Demodulation Reference Signals (DMRS) for the downlink, and Sounding Reference Signals (SRS) or DMRS for the uplink. The UEs receive these pilot signals and send back feedback to the BS, typically indicating channel measurements or characteristics. This feedback is based on the known pilot signals, enabling the BS to infer the channel's properties.

The BS processes the feedback to estimate the Channel Impulse Response (CIR) for each antenna pair between the BS and the UEs. This estimation allows the BS to understand the channel's amplitude, phase, and spatial characteristics. Using the channel estimates, the BS calculates optimal beamforming weights using algorithms like Maximum Ratio Combining (MRC), Zero-Forcing (ZF), or Minimum Mean Squared Error (MMSE). These weights are then used to optimize signal transmission and minimize interference. The BS sends the calculated beamforming weights to the UEs. The UEs apply these weights to their uplink transmissions, multiplying the data symbols by the corresponding weights to ensure effective communication.

### Improved MU-MIMO beamforming reporting

An exemplary system in which an exemplary embodiment may be implemented where an access point (AP) 200 is used to manage the transmission and the reception of a group of stations (STAs) 211, 212, 221, 222 and 231 is shown in Fig. 2. The STAs are trying to get an uplink access (UL) for communication or another type of service provided by the AP. As mentioned above, in any communication network, establishing UL access requires a sequence of coordinated interactions between the AP and the STAs, commonly referred to as a handshaking process. An example, shown in Fig. 3 and briefly mentioned above shows the scheduled access approach, exemplarily using the Wi-Fi UL trigger-based mechanism, which consists of the four key steps:
1. Trigger Frame Transmission: The process begins with the AP sending (e.g. broadcasting) a Trigger Frame (TF) 301 to all the STAs. The TF signals to the STAs that the AP is ready to manage their UL transmissions and prepares the system for next stages of the handshaking process.
2. Station Response with Null Data Packet (NDP) 311, 312: In response to the AP's Trigger Frame, the STAs that require UL resources send an NDP. This NDP acts as a confirmation that the stations are ready to participate in the uplink transmission and allows the AP to identify which STAs are active and need to be scheduled for uplink communication.
3. Joint Precoding and Feedback Report Generation: Upon receiving the NDP from the STAs, the AP calculates a beamforming feedback matrix based on the channel state information from the stations. The channel state information may be calculated, for instance based on training fields in the NDP. This matrix forms the basis of a beamforming feedback report 320, which is then sent to the STAs. The beamforming feedback report comprises precoding information for each STA, facilitating optimal beamforming and MU-MIMO performance in the uplink direction. This process, referred to as Joint Precoding, ensures that the AP has gathered and processed the necessary channel information before the STAs proceed to transmit their data.
   This feedback report is sent to all STAs simultaneously, and the handshaking process ensures that each STA receives its specific precoding information prior to data transmission. This step reduces (ideally minimizes) interference and increases (ideally maximizes) the effective use of the shared wireless medium.
4. Data Transmission Using Precoded Information: In the final step, each STA extracts its specific precoder information from the feedback report received from the AP. The STAs then use this information to transmit their uplink data in the form of a beamformed (BF) Physical Protocol Data Unit (PPDU) 331, 332. The PPDU is optimized for transmission through the channel, leveraging the extracted precoder to ensure high data rates and minimal interference.

These four steps, which are illustrated in Fig. 3, exemplarily outline the handshaking process necessary for establishing and optimizing UL access in a MU-MIMO of e.g. a Wi-Fi network.

By following this sequence, the network may facilitate efficient resource allocation, robust channel utilization, and seamless communication between the AP and STAs.

Based on (IEEE 802.11ax/11be), the NDP includes:
1. Short Training Field (STF): STF is used for packet detection and Automatic gain detection, it also helps in synchronization.
2. Long Training Field (LTF): LTF is used by the AP for channel estimation, LTFs acts like pilots through which channel estimation can be done and precoding matrix is prepared so that Beamforming Report can be prepared and sent back to STA's.

There is no data field in the NDP frame. The AP uses the pilots to also identify the STAs. After the Trigger Frame is sent, Wi-Fi standards have a period interval known as Short Interframe Space, this interval allows STAs to process Trigger frame information before they can send NDP's. However, Wi-Fi is only an example system which may accommodate the approaches disclosed herein.

The techniques and communications systems described above regarding scheduled access may be combined with any of the implementations described below. In the present disclosure, the beamforming feedback report is further improved.

Specifically, the beamforming feedback report (BFR) is transmitted to the user STAs based on spatial information that has already been collected at the AP. This spatial information may be gathered during the initial stages of communication, specifically from the TF sent by the AP and the NDP responses from the STAs. This feedback mechanism may be referred to as Grouped Beamforming - Beamforming Feedback Report (GBF-BFR) 420, as illustrated in Fig. 4. In Fig. 4, steps 401 and 411/412 can correspond (may be the same as) respective steps 301 and 311/312 of Fig. 3 described above.

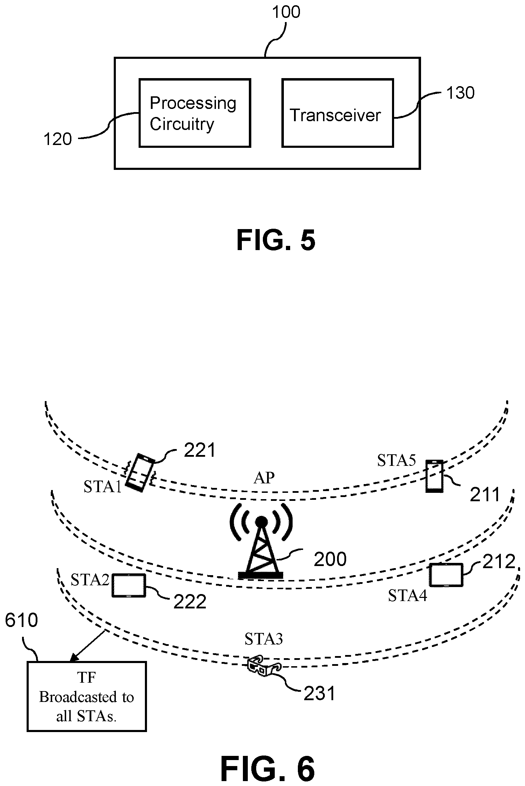

In an exemplary implementation, shown in Fig. 5, an access point, AP, 100 for wireless communication, comprises a transceiver 130 and processing circuitry 120. The processing circuitry may control (configure) the transceiver 130 to transmit and/or receive signals carrying signaling and/or payload information, to perform beamforming and the like.

The transceiver 130 is configured to transmit trigger information. An example for the AP sending trigger information 610 is shown in Fig. 6. The AP 200 sends trigger information 610 via broadcast. In this example STAs STA1 to STA5, with reference signs 221, 222, 211, 212, and 231 receive the trigger information. The trigger information informs candidate wireless communication devices of a coordinated uplink access procedure. For example, the trigger information may be the trigger frame TF described above with reference to Figs. 3 and 4. In the following, the candidate wireless communication devices are also referred to as STAs. However, such devices may be any devices that participate in any of the above described wireless networks and are not limited to Wi-Fi or to the 3GGP 5G/6G systems.

Trigger information may be in general any information, which signal to the STAs that the AP is ready to manage their UL transmissions, and may prepare the system for the next stages of the communication process or possibly specifically a handshaking process and/or an initial access process. The trigger information basically triggers STAs that have data for transmission to report to the AP. There is no further information necessary to be carried within this information. Already the detection of presence of the trigger information at the STA is sufficient to trigger the uplink transmission procedure. To achieve this, the trigger information may comprise an identifier (indicating the received signal as the trigger information). However, the present disclosure does not limit the contents of the trigger information.

While this information is conventionally used solely for channel feedback between the BS and UEs, the present disclosure is not limited to this conventional approach. For instance, the trigger information can be followed by an additional step where directional information is extracted and utilized to optimize the feedback process. Specifically, this extracted directional information can be employed to reduce the size of the uplink beamforming feedback, enhancing the efficiency and adaptability of the system.

As mentioned above, the trigger information may correspond to, or be comprised in, a trigger frame. Such trigger frame may be a frame that is consistent with the trigger frame for uplink access procedures in WiFi or a corresponding frame in other wireless communication technologies like 5G/NR. The uplink access procedure may be a procedure for Initial Access. The AP for wireless communication may be a WiFi access point or a cellular base station like an eNodeB or gNodeB or any other central entity of a wireless communication network and may, for instance be exemplary shown as AP 200 in Fig. 2. Examples for other wireless technologies may be Zigbee, Z-Wave or LoRaWAN. The term AP is to be understood as any central entity of a wireless communication network.

Although the trigger information may be broadcasted to all devices within the coverage area of the AP as shown in Fig. 6, the present disclosure is not limited to broadcast. It is conceivable to perform a multicast or unicast to a predetermined group of users.

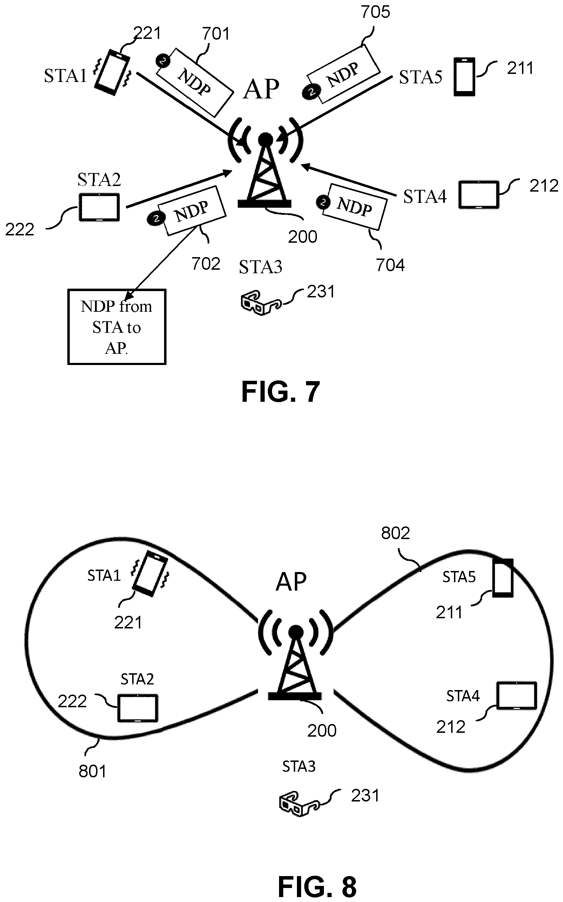

The transceiver 130 is further configured to receive response information from a plurality of devices 221, 222, 211 and 212 as exemplarily shown in Fig. 7. In this example, devices 221, 222, 211 and 212 send a response 701, 702, 704, 705 while device 231 does not send a response. The devices may be any devices for wireless communication with the AP. As an example, the devices are described as stations. However, the devices are not limited to stations for Wi-Fi communication and may, for instance, be user equipment (UE) or Next-Generation NodeBs (gNB). The terms UE or STA is to be understood as an example for any device for wireless communication with a central wireless communication entity in all exemplary implementations described herein. Fig. 7 exemplifies the devices as smartphones 221 and 211, tablets 222 and 212, and virtual reality glasses 231, but in general, any device supporting an uplink transmission may participate by receiving the GBF-BFR report.

It is noted that the transceiver 130 may include a signal transmission front end and/or signal reception front end. The signal transmission front end may comprise one or more amplifier stages, up-conversion from base band signal to the carrier frequency, beamforming controller or the like. The signal reception front end may comprise one or more amplifier stages, downconversion the carrier frequency to the base band signal, or the like. The transceiver may further include multiple antennas. However, it is noted that the antennas are not necessary included in the transceiver. Rather, the antennas (and possibly a part or the entire front end processing chain) may be external and connected to the access point via ports comprised in the access point.

The processing circuitry 130 of the AP is configured to determine directional information from the response information for each of the plurality of devices. In other words, following the transmission of the triggering information, the transceiver of the AP receives response information form one or more communication devices (STAs). This response information may correspond (or be) the NDP mentioned above with reference to Figs. 3 and 4. In some systems, the time domain resources of the response signal are at least partially determined by the time point of receiving the trigger information. For example, the response information is transmitted a given number of time resource units after receiving the triggering information. The resources of the remaining domains (e.g. frequency, possibly a signature/scrambling code or the like) may be randomly selected from a pool of resources or the like.

The directional information may be any information that indicate a directional relation between the AP and the UEs. For instance the directional information may include one or more (or all) of:
1. Channel State Information (CSI): This may include phase and amplitude variations across multiple antennas, which can provide spatial directionality.
2. Angle of Arrival (AoA): This information allows the AP to estimate the spatial positioning of the STAs. This may enable AP to design beams tailored to specific spatial groups and to perform spatial multiplexing for those groups.
3. Direction of Motion: If the STA is moving, Doppler shift data can reveal the direction and speed of movement, helping the AP predict and adapt to spatial changes. Such direction of motion information may further be deduced from previous signals from the STA.
4. Received Signal Strength Indicator (RSSI): Variation in signal strength across antennas can provide clues about the STA's direction relative to the AP.

Regarding the CSI, for STAs or APs to perform beamforming, they ought to have multiple antennas. When they send the NDP, different spatial streams can be used (which also means different TX - RX antenna paths may be involved). Thus, different phases and amplitudes are received at the AP. The phases provide angular changes in the transmission which may help the AP to determine the direction of the STAs and thus help a grouped beamforming feedback to the STAs. As an example, if we have 2Tx and 2Rx, we have possibility of phases and amplitude of TX1 to RX1, RX2, likewise for amplitudes and phases for TX2 to RX1, RX2 which results in 4 spatial streams. The phases may be used for providing spatial separation of these TX, RX pairs and hence directivity, especially when multipath signal is involved.

The directional information may further be deduced from information other than or in addition to the response information. For instance, information from previous communication with the same STA may be used to predict the position of a STA. The AP may further determine precoder information for communication between the AP and the devices from the response information for each of the plurality of devices.

It is noted that in determining AoA, one of the antennas may be referred as a reference, so for example, for an AP with 4 antennas, one antenna will be taken as a reference. Array perpendicular to this antenna can be considered as a reference and the angular deviations of other rays with respect to this reference are their corresponding angles of arrival, AoA. However, these are only examples on how the AoA is provided and not to limit the present disclosure. Any reference may be provided by a convention (e.g. a standard) so that both receiver and transmitter (STA / AP or the like) can correctly interpret it.

Regarding the direction of motion, the velocity of the moving STA, translates to Doppler shifts or spread in the NDPs received by AP, this Doppler shift may help the AP to determine the direction of motion and even the speed of motion if needed. For example, in estimating Doppler frequency the standard formula is fd = v . f cos(A)/c where v is the velocity of moving object, f is the carrier frequency, c is speed of light, and A is the angle at which waves reach the receiver from a moving object. Given that the AP is fixed, when STA is moving towards the AP, the detected Doppler shift will be positive, otherwise when the STA is moving away, the Doppler shift will be negative, the angle gives the extent of the effect of the Doppler; with A = 0 having the maximum in any direction, when the user is circling the AP, there may be no Doppler shift experienced.

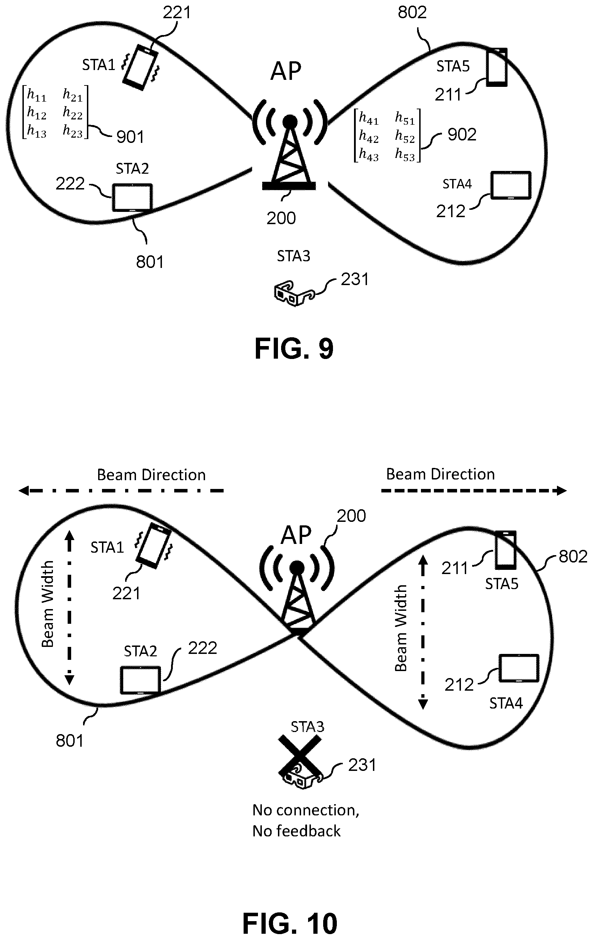

The processing circuitry 130 is further configured to divide the plurality of devices into at least two groups based on the directional information of the respective plurality of devices. Moreover, the processing circuitry 130 is configured to generate, individually for each of the groups, feedback information, and causes the transceiver to transmit the respective feedback information for each of the groups based on the directional information of the devices in the group. Fig. 8 exemplarily shows two groups in which STAs (devices) are grouped. However, this is just an example and any number of groups may be formed depending on the number of antennas on the access point and the spatial distribution of the STAs. In the example shown in Fig. 8, STA1 and STA2 (devices 221 and 222) are grouped and the directional information of STA1 and STA2 are used by the AP 200 to transmit feedback information using a beam 801 to STA1 and STA2. Similarly, STA4 and STA5 (devices 212 and 211) are grouped and the directional information of STA4 and STA5 are used to transmit feedback information using a beam 802 to STA4 and STA5. As can be seen, the beam 801 and the beam 802 in this example point into opposing directions so that they do not interfere as is also illustrated in Fig. 10. STA3 does not participate (is not sent the feedback), as it did not transmit the response information. This is illustrated in Fig. 10 by crossing the STA3 device.

In general, the present disclosure is not limited to any specific number of groups or devices in the group: any number of groups may be formed and each group may have any number of devices. In an exemplary embodiment at least one of the groups comprises at least two devices, wherein devices may be STAs or other wireless communication devices. It is also conceivable to have groups in which there is only a single device (e.g. the device 231 in Fig. 8 could receive the AP feedback in an individual beam in case it had responded to the triggering information).

For example, the devices are grouped based on spatial proximity. Spatial proximity is proximity of location of the individual devices. For example the devices may be grouped by clustering based on their spatial proximity. The present disclosure is not limited to any specific clustering approach. Any known 2D clustering approaches may be applied. The clustering may be done such that in communication of the AP with the resulting groups (clusters of STAs) reduces interference. For instance, a threshold-based angular clustering mechanism may be implemented which may comprise calculating the angular positions of all devices relative to the AP, sorting devices by increasing angular position, computing the angular difference between consecutive devices, and if the angular difference between two devices exceeds a predefined threshold a new group is started. The setting of the threshold may depend on the system design criteria. For example, some systems may operate with a threshold set at 45 degrees, while others can use 90 degrees and above. For some systems (e.g. with many antennas), the angle threshold may be selected lower. A lower threshold value results in a larger number of groups, as it allows for a finer separation of users based on spatial proximity. Conversely, a higher threshold value leads to fewer groups, as it separates users based on spatial proximity in a looser manner.

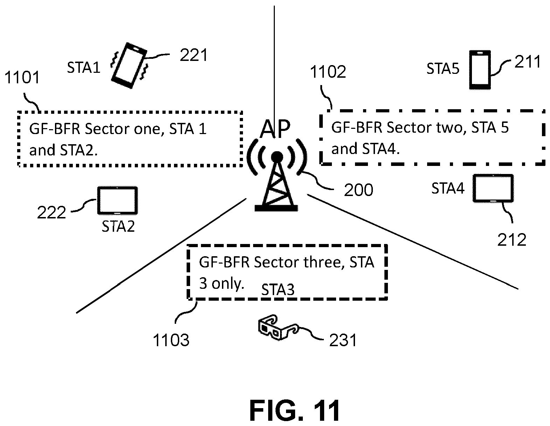

In addition or alternatively, a K-means clustering may be implemented by the AP. In such clustering, K denotes the number of clusters to arrive at. The devices may then be clustered such that K clusters are generated wherein the relative angular distance between adjacent devices in two different groups is larger than the relative angular distance between devices within a group. It is noted that K may be pre-configured (pre-set). Such case may be referred to as fixed beamforming feedback proximity where there is a specific number of sectors as in the case described with reference to Fig. 11. Some exemplary possible values of number of clusters may bet three or four. As mentioned above regarding the separation angle, the number of clusters may also depend on the system and the beamforming capabilities such as number of antennas and the like.

For example, in case where the STAs are relatively stationary or evenly distributed across defined spatial regions, groups may be predefined. In such case, the overhead will be minimized.

On the other hand, the number of groups may be determined dynamically based on:
1.Spatial Distribution: The density and proximity of STAs in the network. Which SATs are near to each other are grouped to one type of feedback.
2.Beamwidth Capability: The ability of the AP to form narrower or broader beams.
3. Channel Conditions: High interference scenarios may require finer granularity (more groups), while low-interference scenarios can operate with fewer groups.
4. Frequency Band: Higher-frequency bands (e.g., mmWave) may require smaller and more precise groups due to their directional nature.

The groups may be constructed such that no group covers more than a predefined number of devices. Such predefined number of devices may be, for instance, the total number of devices divided by K, or said result rounded up to the next natural number or may further be said number plus a natural number like, for instance, 1.

Alternatively or in addition, the groups may be limited by the angular range covered by the group. This range may be predefined and/or dependent on K.

Another example for possible clustering applicable to form the groups of devices is hierarchical clustering with angular metrics. The pairwise angular distances between the devices may be calculated. A dendrogram or tree of clusters may be created based on angular similarity. For instance, as a start and endpoint of the dendogram the two devices may be used with the largest relative angular distance to each other. The dendrogram may then be cut at a predefined level. Alternatively, the level at which the dendrogram is cut is not predefined but may be, for instance, chosen such that a predefined number of groups is achieved or such that no group includes more than a predetermined number of devices, wherein the predetermined number can be, for instance, any of the numbers described for K-means clustering.

At the beginning of the clustering, each STA can form its own group. Then, angular separation is calculated between the STA and its closest neighbor. The STA and the neighbor are then placed into a same group and the process is repeated iteratively. By cutting off, the grouping process is stopped. The terminating criterion can be defined, for instance, based on a number of devices in a group. For example, if it is desired that the matrix size contains no more than 3 STAs, the tree is cut-off when grouped STAs reach the number of 3, and then a new group is started. The cutting-off can also be done in group level to ensure that a specific number of groups is not exceeded. The present disclosure is not limited to any specific cut-off criteria.

The dendrogram may be cut off whenever a group reaches the predetermined number of devices, the group is not propagated further in the dendrogram such that it does not include further devices, but the other devices and groups are grouped together further until each group reaches the predetermined size or cannot grouped with other devices or groups anymore.

However, aforementioned clustering methods are to be understood as examples only. Indeed, any clustering or grouping method may be implemented. The present disclosure is not limited to clustering based on spatial proximity and may use any other grouping like, for instance, a directional grouping based on the relative direction (angle) of the location of the devices from the AP or sectorizing.

According to an exemplary implementation the coverage area of the access point, AP, is divided into fixed sectors, and in the dividing of the plurality of devices into the groups, each group corresponds to one sector and a device is assigned to a group when it is located in the respective sector. Beams with different beam directions may be used for the different sectors.

Each of the beams may have a direction and beam with such that the respective sector is covered. According to an example, the beams may be chosen such that interference with other sectors are reduced.

For example, a beam is associated with each sector respectively wherein the direction and width of the beam is fixed. Direction and width may be chosen such that interference of the beams associated with different sectors is minimized (or at least reduced). Fig. 11 shows an exemplary implementation using sectoring. In the example shown in Fig. 11, three sectors 1101, 1102, 1103 are used. However, any number of sectors may be used. For instance, two or four sectors may be used. These sectors and the number of sectors may be predetermined or adapted to the actual needs, for instance, based on the density of devices.

Each sector 1101, 1102, 1103 may cover a specific spatial area. Feedback information may be sent to all STAs within a sector using a constant beam. This method may be particularly effective in scenarios where STAs are relatively stationary or evenly distributed across defined spatial regions or where the AP cannot provide an adaptive beamforming feedback to the STAs. However, the beams may also be dynamically adapted to the needs in the respective sectors. Feedback information 420 may, for instance, be comprised in a beamforming feedback report or the feedback information may be a beamforming feedback report. Particularly, the beamforming feedback report may be the GF BFR.

According to an exemplary implementation (which is combinable with any of the examples described above), the feedback element for each device in the group comprises precoding information for the respective device. This may facilitate optimal beamforming and MU-MIMO performance in the uplink direction and reduce interference. The AP may calculate a beamforming feedback matrix based on the channel state information from the stations. One advantage may be reduction in the size of the feedback report that may be comprised in the feedback information. In traditional systems, the AP typically sends a large beamforming feedback matrix to all users in the network. For instance, in a scenario where the AP sends, for instance, a 3×5 matrix (representing multiple antennas and users) to every user, this may create a substantial overhead and processing complexity. In contrast, with the proposed grouped feedback approach, the AP may send a smaller, more targeted feedback matrix to users in specific spatial directions. Instead of transmitting a full matrix to all users, the AP may send a reduced, for instance 3×2, matrix 901, 901 to each group of users, as illustrated in Fig. 9. This method may significantly decrease the amount of data exchanged between the AP and the STAs, leading to less computational load and more efficient communication.

A feedback matrix contains channel coefficients between the AP and the STA. Thus, the size of the matrix increases with a) the number of STA devices, b) the number of TX and RX antennas (Ntx, Nrx), and c) the number of scatterers in the channel.

When assuming LoS scenarios, the size is at least a Ntx × Nrx matrix size for each STA. Thus, if there is one STA with 2 antennas and an AP with 4 antennas, there are 2 × 4 = 8 channel coefficients for one STA. In case of 2 STAs, it becomes 16. If there are 5 such STAs, the size can go up to 40. In case of subcarrier or subband feedback, it becomes even more complex. Since traditionally all the matrixes are sent together, the feedback becomes huge, and complex to process. By spatial grouping, reduction of size of the feedback matrix may be reduced, so that only spatially related STA's share the same matrix.

The GF-BFR may represent a more efficient method of feedback compared to traditional joint precoding methods. It may significantly reduce overhead at the STAs, both in terms of the size of the feedback report and the amount of information required to be processed by each station. By using the GF-BFR, the interference from users within a specific spatial grouping may be managed more effectively.

According to an exemplary implementation which is combinable with any of the examples described above, the individual feedback information for each group comprises a feedback element for each of the plurality of devices in the group. For example, one GF-BFR may be transmitted for each group and each GBF-BFR may comprise an individual feedback element for each of the devices in the respective group.

The individual feedback information for each group comprises no feedback element for one or more or all other devices which are assigned to another group. For instance, the individual feedback information for each group comprises no feedback element for one or more devices that are not assigned to said group. Accordingly, instead of considering interference from all users in the network, the AP may account only for interference among users in the same spatial group. The multi-user interference management techniques and interference cancellation strategies implemented at the AP may thus be limited to those specific users in a particular direction or group, making the process more efficient.

This may be a notable improvement over conventional joint precoding methods, where the beamforming feedback report includes data for all users in the network, increasing both the size of the report and the complexity of interference management. By focusing on grouped users and limiting the feedback to essential spatial information, the proposed GF-BFR may reduce the processing burden at the STAs and enhance the overall efficiency of UL channel access.

The feedback information may be advantageously transmitted to all devices within a group simultaneously. For instance, the feedback information for each group is transmitted to the devices in the respective group simultaneously. According to a further example, the feedback information to all groups is transmitted simultaneously. In particular the spatial group multiplexing may be applied in which an integrated signal of all groups is transmitted at the same time by the AP.

For example, the individual feedback information for each group is transmitted using at least one individual beam for each group. For instance, the individual feedback information for each group may be transmitted using exactly one beam per group.

Alternatively, the individual feedback information for one or more of the groups is transmitted using multiple beams within a group. However, this approach may increase the overhead on the AP, as it may require additional computational and resource allocation efforts. In an exemplary implementation, the AP may dynamically switch to a single beam per device for one or any number of the devices when necessary to possibly optimize performance.

For instance, in mmWave deployments in Wi-Fi 8, where more granular directional control may be achievable, it may be feasible to assign a dedicated beam to each device for feedback. In this exemplary implementation, each device may effectively be treated as an individual group, aligning with the requirements of precise spatial control in such environments. However, according to an example, at least one individual beam is used for a plurality of devices in at least one group. In clustering dynamically devices based on their spatial proximity, techniques such as grouping by AoA or signal characteristics like RSSI may be used. For example, STAs with closely aligned directional information can be grouped, allowing the AP to form adaptive beams tailored to these clusters as mentioned above.

The direction and width of each beam may be chosen such that one or more devices of the respective group are covered. For instance, the width and direction of a beam may be chosen such that all devices of the respective group are covered by the beam and no devices of other groups are covered as is also illustrated in Figs. 8 to 10. For instance, the width of a beam (see Fig. 10) may be chosen such that all devices of a group are covered and the beam extends beyond the outermost devices by a predetermined amount. For instance, the angle range covered by the beam may be chosen such that the covered angles ranges up to a predetermined angle beyond the outermost devices.

Alternatively, the angle range covered by the beam may be chosen such that the covered angles range up to an angle beyond the outermost devices which corresponds to half the angle of the outermost device and the next device of another group.

Further or alternatively, any method may be implemented that may be used in spatial multiplexing to select the shape of the beams. Such methods may reduce interference with devices of other groups and/or enhance reception of devices of the respective group. According to an exemplary implementation, the beams for transmitting feedback information, for instance feedback information matrices for the different groups of devices, may be designed by the AP such that interference between the beams for different groups is reduced.

In a conventional case, in which the feedback may have a large size, errors can occur with a higher probability as a consequence of having a large channel matrix feedback channel. Based on the present disclosure, by maintaining the angular separation between the beams and their directivity, the precoding used to transmit the beams facilitates that eigenmodes are direct in a way that they do not interact or interfere with each other. Several approaches/optimization solutions are available to optimize the best size of the feedback where the UEs are not interfering with each other. Also, solutions are available for optimizing the precoder itself to minimize interference. In the proposed approach, the feedback size is reduced and therefore, the interference can be improved (minimized).

The interference reduction may be achieved by dynamically adjusting the beam width and beam direction according to the spatial characteristics of the respective groups. As an example, this may be achieved by having proper channel estimation, which would facilitate efficient cancellation of signals in unintended directions (e.g. Zero Forcing) and minimize sidelobes as much as possible. This exemplary beam design mechanism may ensure that interference between the beams for different groups is minimized or eliminated, aligning with the overall efficiency and precision goals.

According to an embodiment, a system for wireless communication is provided. The system comprises an AP 200 and a plurality of devices 211, 212, 221, 222, 231. The AP 200 comprises the transceiver 130 configured to transmit trigger information as described above and the processing circuitry 120. One or more of the devices 211, 212, 221, 222, 231 comprise a transceiver configured to receive the trigger information and processing circuitry configured to determine if the device is ready to participate in uplink communication and/or establish uplink access, and cause the transceiver of the device to transmit response information if the device is ready to participate in uplink communication and/or establish uplink access with the AP. The transceiver of the AP is further configured to receive the response information from a plurality of devices. The processing circuitry of the AP is configured to determine directional information from the response information for each of the plurality of devices, divide the plurality of devices into at least two groups based on the directional information of the respective plurality of devices, generate, individually for each of the groups, feedback information; and cause the transceiver of the AP to transmit the respective feedback information for each of the groups based on the directional information of the devices in the group.

According to an embodiment, a device for wireless communication comprises a transceiver configured to receive the trigger information from an AP and processing circuitry configured to determine if the device is ready to participate in uplink communication and/or establish uplink access, and cause the transceiver to transmit response information if the device is ready to participate in uplink communication and/or establish uplink access. The processing circuitry of the device may refrain from causing the transceiver to transmit response information if the device is not ready to participate in uplink communication and/or establish uplink access with the AP.

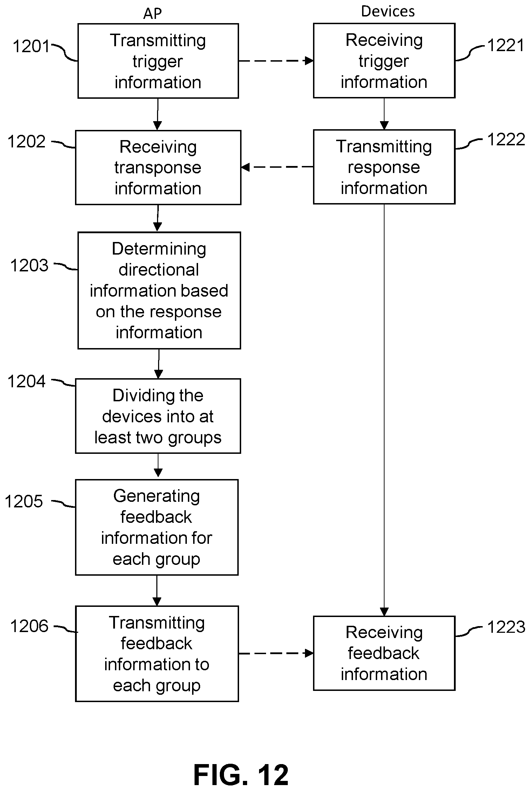

An exemplary implementation may be a protocol-based method as part of the handshaking process that takes place before data transmission begins. This approach defines a sequence of steps that allow efficient UL resource management by the AP. Fig. 12 shows an exemplary method of an AP and a device. The left side of Figure 12 shows and exemplary method of an access point.

In an exemplary implementation, a method for wireless communication of an access point with a plurality of devices comprises:
- transmitting 1201 trigger information by the AP,
- receiving 1221, by a plurality of devices, the trigger information,
- transmitting 1222 response information by a plurality of devices,
- receiving 1202, by the AP, response information from the plurality of devices that have transmitted response information,
- determining 1203, by the AP, directional information from the response information for each of the plurality of devices (this may be for example precoder information or any kind of information related to the directions),
- dividing 1204, by the AP, the plurality of devices into at least two groups based on the directional information of the respective plurality of devices,
- generating 1205, by the AP individually for each of the groups, feedback information,
- transmitting 1206, by the AP, the respective feedback information for each of the groups based on the directional information of the devices in the group, and
- receiving 1223 by the devices, at least by the devices that have transmitted response information, the feedback information.

The method may further comprise communicating, by the devices, via uplink transmission with the AP. Such communication may include sending, by the devices, respective PPDUs. This may be performed simultaneously and/or according to the feedback report. Fig.12 shows the steps of the AP on the left side and the steps of the devices on the right side. Although there is only one flow of steps shown for the devices, the steps may be performed by a plurality of devices.

Accordingly, an exemplary implementation of a method for wireless communication of an access point, comprises transmitting 1201 trigger information, receiving 1202 response information from a plurality of devices, determining 1203 directional information from the response information for each of the plurality of devices, dividing 1204 the plurality of devices into at least two groups based on the directional information of the respective plurality of devices, generating 1205, individually for each of the groups, feedback information, and transmitting 1206 the respective feedback information for each of the groups based on the directional information of the devices in the group.

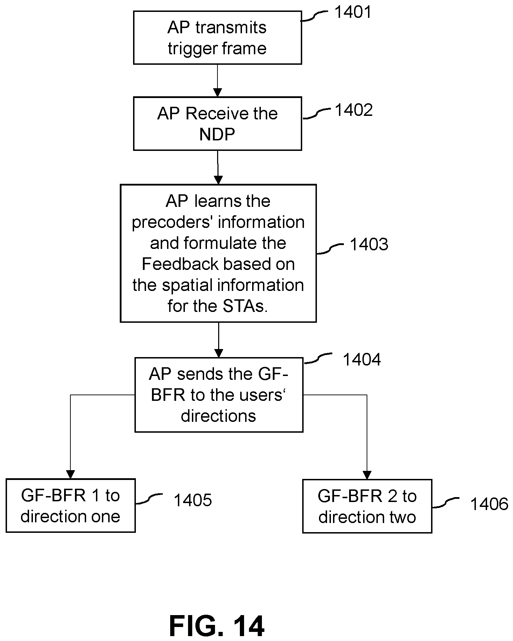

Fig. 14 shows a further method for wireless communication of an access point, comprising transmitting 1401 a trigger frame, receiving 1402, from a plurality of devices an NDP respectively, learning 1403, from the NDPs precoder information and preparing feedback information based on spatial information of the STAs and sending 1404 a first GF-BFR to a first direction and sending 1406 a second GF-BFR to a second direction different from the first direction. The first GF-BFR may be feedback information for a first group of devices and the second GF-BFR may be feedback information for a second group of devices.

The plurality of devices that transmit response information may be all or some of the plurality of devices that have received the trigger information. Particularly, the plurality of devices that transmit response information may be all devices of the plurality of devices that have received the trigger information and signal to the AP that they are ready to participate in uplink communication and/or establish uplink access. According to an example, response information may be a null data packet NDP.

According to exemplary implementations of above methods, at least one of the groups comprises at least two devices.

According to further exemplary implementations of above methods, the individual feedback information for each group comprises a feedback element for each of the plurality of devices in the group.

According to an exemplary implementation, the response information of each device acts as a confirmation that the device is ready to participate in the uplink transmission and allows the access point, AP to identify that the device is active. For instance, response information of each device may comprise a device identifier. This may apply to all embodiments. For instance, this may apply to embodiments relating to an AP and to embodiments relating to methods of an AP or methods for wireless communication of an access point with a plurality of devices.

In some of the following exemplary implementation, the devices are exemplarily described as STAs, the trigger information is exemplarily described as trigger frame and response information is exemplarily described as NDP. Feedback information is exemplarily described as GF-BFR or feedback report. All implementations described with any of the above terms can be combined with implementations described with the respective other terms.

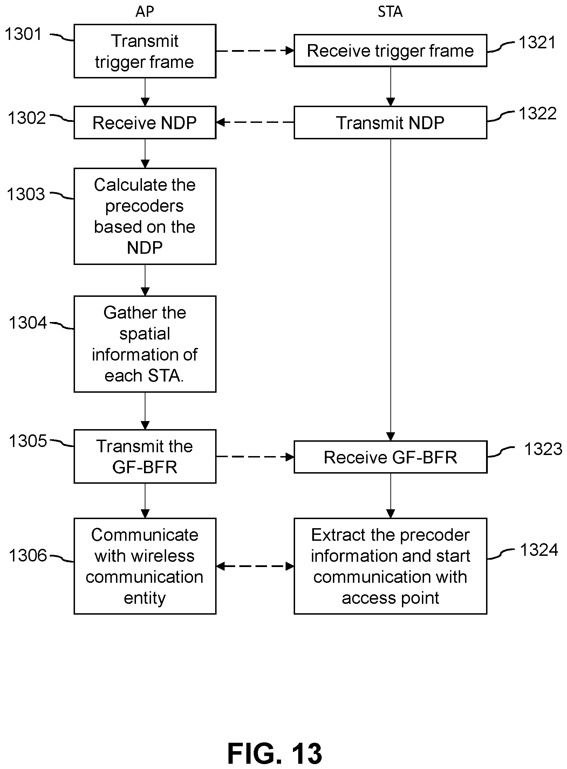

The process of an exemplary implementation is shown in Fig. 13 and may begin with the AP sending 1301 a TF 610 and/or trigger information to all the STAs within its coverage area, as shown in Figure 6. For instance, the TF may be broadcast and may be received 1321 by all active STAs. The purpose of this frame may be to identify the STAs that intend to use uplink resources. STAs that are ready for UL transmission respond to the TF, allowing the AP to gather information on which STAs need to access the UL channel. This step may help selecting STAs for UL scheduling and resource allocation.

As a second step, once the STAs receive 1321 the TF, those that wish to access the UL resources may send 1322 an NDP 701, 702, 704, 705 in response as also shown in Figure 7. This NDP may act as a signal to the AP that these particular STAs are ready to transmit data in the uplink direction. The AP may receive 1202 these NDPs and use them to determine which STAs will participate in the next phase of the process. Furthermore, the AP may calculate precoders based on the NDPs 1303 and gather spatial information of each STA 1304.

As a third and final step, after gathering responses from the STAs, the AP may utilize the spatial information from the NDPs to generate 1205 a GF-BFR as shown in Figure 8. This feedback report, which is based on spatial groupings, may be sent 1206 to and received 1323 by the STAs to inform them of the beamforming parameters, such as precoding information, that they should use during their uplink transmissions. The GF-BFR may reduce the size of the feedback and reduce the computational overhead at the STA side by only including relevant spatial information for grouped users, rather than including data for all users in the network. In the final step, each STA may use the beamforming feedback from the GF-BFR to configure its transmission. The stations may send 1324 their data in the form of a beamformed Physical Protocol Data Unit (PPDU), using the precoding information extracted from the feedback report. This may ensure that uplink transmissions are spatially optimized, reducing interference between users and improving overall network efficiency.

The proposed protocol-based approach may provide several key advantages, particularly by streamlining the feedback process and improving UL efficiency. The three-step procedure, involving the TF, NDP response, and the GF-BFR, may bring a number of benefits.

One advantage may be the reduction in the size of the feedback report. In traditional systems, the AP typically sends a large beamforming feedback matrix to all users in the network. For instance, in a scenario where the AP sends a 3×5 matrix (representing multiple antennas and users) to every user, this creates substantial overhead and processing complexity. In contrast, with the proposed grouped feedback approach, the AP may send a smaller, more targeted feedback matrix to users in specific spatial directions. Instead of transmitting a full matrix to all users, the AP may send a reduced 3×2 matrix to each group of users, as illustrated in Figure 7. This method may significantly decrease the amount of data exchanged between the AP and the STAs, leading to less computational load and more efficient communication.

By grouping users based on their spatial locations and sending tailored feedback to each group, the AP may optimize resource allocation. The AP may send only the necessary feedback relevant to each specific group, ensuring that uplink resources are used efficiently without overwhelming the network with unnecessary information. This may allow the AP to handle multi-user interference and beamforming in a more focused and streamlined manner.

With the proposed GF-BFR, interference among users may be localized within specific spatial groups, rather than across the entire network. This means that users within a particular direction may affect one another, but the AP's interference cancellation techniques may be applied only to those specific users, rather than the entire set of users in the network. This localized interference management may result in more efficient multi-user interference handling, enhancing the overall network performance.

One of the advantages of the proposed approach may be the added layer of security it offers during the handshaking process. By selectively transmitting the GF-BFR to only the relevant STAs, the AP ensures that only those STAs actively participating in the UL access process can receive the feedback. For example, as shown in Figure 10, STA3 231, which is not authorized or involved in the UL transmission process, is unable to receive feedback from the AP. This selective feedback mechanism may create a secure environment for handshaking, preventing unauthorized stations from accessing critical transmission information. In an exemplary implementation, only the STAs that are intended to participate in the UL access can receive and use the feedback data, thereby reducing the risk of eavesdropping or interference from unauthorized users.

Based on past communication with users in the area, the AP has knowledge of the approximate set of devices within the network. This historical information helps the AP identify potentially present devices. Additionally, AP may actively avoid devices that have not sent an NPD. This dual mechanism, leveraging past communication and real-time behavior (or absence thereof), enables the AP to effectively manage beamforming feedback and optimize the allocation of uplink resources.

The proposed approach may offer significant flexibility by allowing the AP to adjust the feedback dynamically based on beam width and beam direction. These parameters are particularly beneficial for the mm-wave band in Wi-Fi 8, where precise spatial control is critical. By adjusting the beam width, the AP can fine-tune the coverage area for the feedback, concentrating resources on smaller, more focused groups of users when necessary. Similarly, by modifying the beam direction, the AP may be able to target specific STAs or groups of devices based on their spatial positions. This precise control may improve both the efficiency and security of uplink transmissions, as the AP can better allocate uplink resources and adapt to the network's real-time needs. This flexibility may be essential for optimizing performance in the higher-frequency mm-wave band, where beamforming plays a crucial role in maintaining robust communication links.

Moreover, this adaptability may make the proposed approach especially compatible with future Wi-Fi 8 deployments in the mm-wave spectrum. Importantly, the solution may achieves this without requiring major changes to the existing Wireless LAN Medium Access Control (MAC) and Physical Layer (PHY) specifications. By retaining backward compatibility with current Wi-Fi standards while ensuring forward compatibility with Wi-Fi 8, the approach may seamlessly integrate with future networks operating in the mm-wave band. This may ensures that, as Wi-Fi evolves, particularly in high-frequency environments, the proposed solution will continue to provide enhanced feedback management and resource allocation, supporting the growing demands of next-generation wireless systems.

Accordingly, sectoring may be used as part of the beam discretion mechanism. In such approach, the beam discretion mechanism may be fixed. Sectoring may allow the AP or base station to divide its coverage area into multiple sectors, each with different feedback configurations and beam widths as well as different beam direction. This approach may enable more precise control over UL communication by tailoring the feedback and beamforming parameters based on the specific needs of each sector, as illustrated exemplarily in Figure 11. In this scenario, the AP 200 or base station 200 may be able to dynamically adjust the feedback and beamforming based on the characteristics of each sector 1101, 1102, 1103. For example, regions with high user density or greater interference may require narrower beam widths and more detailed feedback, while less congested areas can benefit from broader beams and simplified feedback. This sectoring approach may offers several advantages.

By segmenting the coverage area into sectors, the AP may be able to adjust the complexity and size of the feedback reports according to the specific requirements of each sector. More complex feedback may be provided where needed, while simpler, more efficient feedback may be used in less demanding sectors. This may reduce the overall system overhead, ensuring optimal performance in each part of the network without burdening all users with excessive feedback data.

Sectoring may also enhance the network's adaptability, as the AP may be able to modify the beamforming and feedback parameters in real time based on changing network conditions. For example, in sectors where user activity or interference patterns fluctuate, the AP may adjust the beam width and feedback dynamically to maintain high-quality UL communication. Additionally, the system may be compatible with various network architectures and can easily be integrated into existing multi-user MIMO systems.

By implementing sectoring, the AP or base station may be able to fine-tune the uplink communication process, improving the network's overall performance in the UL direction. The sector-based approach may allow the network to efficiently allocate resources where they are most needed, enhancing the user experience and reducing unnecessary data transmission.

Since the approach may be protocol-based, it outlines a structured handshaking process between the AP or base station and the STAs for managing UL channel access in a multi-user MIMO network. The handshaking process may ensure efficient coordination between the AP and multiple users before the actual data transmission begins, optimizing both resource allocation and interference management. The overall flow of the proposed approach according to an implementation is depicted in Figure 13, which illustrates a step-by-step protocol for UL communication.

Wireless communication technologies, particularly in multi-user scenarios such as SU-MIMO and MU-MIMO, face several inherent inefficiencies. One significant limitation in current systems is the inefficiency of non-triggered per-STA uplink sounding. In both SU-MIMO and MU-MIMO, the lack of a unified, centralized protocol means that individual non-AP STAs must initiate their own uplink sounding requests. This decentralized approach results in considerable inefficiency, as each station independently manages its uplink transmissions without coordination from the AP. The above described embodiments and exemplary implementations address these inefficiencies and improve the AP beamforming feedback.

### Implementations in software and hardware

It is noted that although embodiments and examples of the present disclosure were provided in terms of a method above, the corresponding devices (access points) providing the functionality described by the methods are also provided. Moreover, it is noted that any of the steps described above may be included as code instructions in a program, which may be executed by one or more processors.

The methodologies described herein may be implemented by various means depending upon the application. For example, these methodologies may be implemented in hardware, operation system, firmware, software, or any combination of two or all of them. For a hardware implementation, any processing circuitry may be used, which may include one or more processors. For example, the hardware may include one or more of application specific integrated circuits (ASICs), digital signal processors (DSPs), digital signal processing devices (DSPDs), programmable logic devices (PLDs), field programmable gate arrays (FPGAs), processors, controllers, any electronic devices, or other electronic circuitry units or elements designed to perform the functions described above.

If implemented as program code, the functions performed by the transmitting apparatus (device) may be stored as one or more instructions or code on a non-transitory computer readable storage medium. The computer-readable media includes physical computer storage media, which may be any available medium that can be accessed by the computer, or, in general by the processing circuitry. Such computer-readable media may comprise RAM, ROM, EEPROM, optical disk storage, magnetic disk storage, semiconductor storage, or other storage devices. Some particular and non-limiting examples include compact disc (CD), CD-ROM, laser disc, optical disc, digital versatile disc (DVD), Blu-ray (BD) disc or the like. Combinations of different storage media are also possible - in other words, distributed and heterogeneous storage may be employed.

The above examples are not to limiting the present disclosure. There are many modifications and configurations, which may be used in addition or alternatively. This present disclosure can be used in any kind of device that is receiving signals over a wireless channel. The embodiments and exemplary implementations mentioned above show some non-limiting examples. It is understood that various modifications may be made without departing from the claimed subject matter. For example, modifications may be made to adapt the examples to new systems and scenarios without departing from the central concept described herein.

### Selected embodiments and examples

Summarizing, embodiments of the present disclosure relates to methods and apparatuses for assigning transmission power in a joint communication and sensing access point. A communication beam is obtained for a communication device according to a location of the communication device. The power available at the access point is obtained. The power available for sensing is then determined, and it is not greater than a difference between the available power and a power of the communication beam. Then, a number of sensing beams is determined to share the power available for sensing and the sensing beams are determined correspondingly.

According to a first aspect, an access point, AP, for wireless communication is provided comprising a transceiver, and a processing circuitry. The transceiver is configured to transmit trigger information, and to receive response information from a plurality of devices. The processing circuitry is configured to determine directional information from the response information for each of the plurality of devices, to divide the plurality of devices into at least two groups based on the directional information of the respective plurality of devices, to generate, individually for each of the groups, feedback information, and to cause the transceiver to transmit the respective feedback information for each of the groups based on the directional information of the devices in the group.

According to a second aspect, further to the first aspect, at least one of the groups comprises at least two devices.

According to a third aspect, further to the first or the second aspect, the individual feedback information for each group comprises a feedback element for each of the plurality of devices in the group.

According to a fourth aspect, further to any of the first to the third aspect, the feedback information is transmitted to all devices simultaneously.

According to a fifth aspect, further to any of the first to the fourth aspect, the feedback element for each device in the group comprises precoding information for the respective device.

According to a sixth aspect, further to any of the first to the fifth aspect, the individual feedback information for each group is transmitted using at least one individual beam for each group.

According to a seventh aspect, further to any of the first to the sixth aspect, the response information of each device acts as a confirmation that the device is ready to participate in the uplink transmission and allows the access point AP to identify that the device is active.

According to an eighth aspect, further to any of the first to the seventh aspect, the devices are grouped based on spatial proximity.

According to a ninth aspect, further to any of the first to the eighth aspect, the direction and width of each beam is chosen such that one or more devices of the respective group are covered.

According to a tenth aspect, further to any of the first to the seventh aspect, the coverage area of the access point AP is divided into fixed sectors, and in the dividing of the plurality of devices into the groups, each group corresponds to one sector and a device is assigned to a group when it is located in the respective sector.

According to an eleventh aspect, further to the tenth aspect, a beam is associated with each sector respectively wherein the direction and width of the beam is fixed.

According to a twelfth aspect, further to any of the first to the eleventh aspect, the trigger information is broadcast to all devices within the coverage area of the access point AP.

According to a thirteenth aspect, a method for wireless communication of an access point is provided comprising transmitting trigger information, receiving response information from a plurality of devices, determining directional information from the response information for each of the plurality of devices, dividing the plurality of devices into at least two groups based on the directional information of the respective plurality of devices, generating, individually for each of the groups, feedback information, and transmitting the respective feedback information for each of the groups based on the directional information of the devices in the group.

According to a fourteenth aspect, further to the thirteenth aspect, at least one of the groups comprises at least two devices.

According to a fifteenth aspect, further to the thirteenth or fourteenth aspect, the individual feedback information for each group comprises a feedback element for each of the plurality of devices in the group.

Moreover, the corresponding methods are provided including steps performed by any of the above-mentioned processing circuitry implementations.

Still further, a computer program is provided, stored on a non-transitory medium, and comprising code instructions which when executed by a computer or by a processing circuitry, performs steps of any of the above-mentioned methods.

According to some embodiments, the processing circuitry and/or the transceiver is embedded in an integrated circuit, IC.

Any of the apparatuses of the present disclosure may be embodied on an integrated chip.

Any of the above-mentioned embodiments and exemplary implementations may be combined.

Although the disclosed subject matter has been described in detail for the purpose of illustration based on what is currently considered to be the most practical and preferred embodiments, it is to be understood that such detail is solely for that purpose and that the disclosed subject matter is not limited to the disclosed embodiments, but, on the contrary, is intended to cover modifications and equivalent arrangements that are within the spirit and scope of the appended claims. For example, it is to be understood that the presently disclosed subject matter contemplates that, to the extent possible, one or more features of any embodiment can be combined with one or more features of any other embodiment.

## Claims

1. An access point, AP, for wireless communication, comprising
a transceiver configured to
transmit trigger information; and
receive response information from a plurality of devices,
a processing circuitry, configured to
determine directional information from the response information for each of the plurality of devices;
divide the plurality of devices into at least two groups based on the directional information of the respective plurality of devices;
generate, individually for each of the groups, feedback information; and
cause the transceiver to transmit the respective feedback information for each of the groups based on the directional information of the devices in the group.

2. The access point for wireless communication according to claim 1, wherein at least one of the groups comprises at least two devices.

3. The access point for wireless communication according to claims 1 or 2, wherein the individual feedback information for each group comprises a feedback element for each of the plurality of devices in the group.

4. The access point for wireless communication according to any of claims 1 to 3, wherein the feedback information is transmitted to all devices simultaneously.

5. The access point for wireless communication according to any of claims 1 to 4, wherein the feedback element for each device in the group comprises precoding information for the respective device.

6. The access point for wireless communication according to any of claims 1 to 5, wherein the individual feedback information for each group is transmitted using at least one individual beam for each group.

7. The access point for wireless communication according to any of claims 1 to 6, wherein the response information of each device acts as a confirmation that the device is ready to participate in the uplink transmission and allows the access point, AP to identify that the device is active.

8. The access point for wireless communication according to any of claims 1 to 7, wherein the devices are grouped based on spatial proximity.

9. The access point for wireless communication according to any of claims 1 to 8, wherein the direction and width of each beam is chosen such that one or more devices of the respective group are covered.

10. The access point for wireless communication according to any of claims 1 to 7, wherein the coverage area of the access point, AP, is divided into fixed sectors, and wherein in the dividing of the plurality of devices into the groups, each group corresponds to one sector and a device is assigned to a group when it is located in the respective sector.

11. The access point for wireless communication according to claim 10, wherein a beam is associated with each sector respectively wherein the direction and width of the beam is fixed.

12. The access point for wireless communication according to any of claims 1 to 11, wherein the trigger information is broadcast to all devices within the coverage area of the access point, AP.

13. A method for wireless communication of an access point, comprising
transmitting trigger information;
receiving response information from a plurality of devices;
determining directional information from the response information for each of the plurality of devices;
dividing the plurality of devices into at least two groups based on the directional information of the respective plurality of devices;
generating, individually for each of the groups, feedback information; and
transmitting the respective feedback information for each of the groups based on the directional information of the devices in the group.

14. The method for wireless communication of an access point according to claim 13, wherein at least one of the groups comprises at least two devices.

15. The method for wireless communication of an access point according to claims 13 or 14, wherein the individual feedback information for each group comprises a feedback element for each of the plurality of devices in the group.
